# EUROPEAN PATENT SPECIFICATION

(11) **EP 4 637 371 B1**
(45) Date of publication and mention of the grant of the patent: **18.11.2026**
(21) Application number: 23837684.2
(22) Date of filing: 22.12.2023
(51) Int. Cl.: A23C 21/10, A23C 9/142, A23C 19/05, A23J 1/20, A23J 3/08

(54) **A METHOD OF CONTROLLING THE MINERAL CONTENT IN A WHEY PROTEIN CONCENTRATE**
VERFAHREN ZUR KONTROLLE DES MINERALGEHALTES IN EINEM MOLKENPROTEINKONZENTRAT
PROCÉDÉ DE RÉGULATION DE LA TENEUR EN MINÉRAUX DANS UN CONCENTRÉ DE PROTÉINES DE LACTOSÉRUM

(30) Priority: 22.12.2022 EP 22216096
(43) Date of publication of application: 29.10.2025
(73) Proprietor: Arla Foods amba, 8260 Viby J (DK)
(72) Inventor: NIELSEN, Kenneth Dyrmose, 8260 Viby J (DK); DAHLBERG, Anders, 8260 Viby J (DK); ANDERSEN, Troels Møller, 8260 Viby J (DK); JENSEN, Steen Lindegaard, 8260 Viby J (DK)
(74) Representative: Plougmann Vingtoft a/s
(86) International application number: PCT/EP2023/087553
(87) International publication number: WO 2024/133864

(56) References cited:
- RU-C2- 2 585 213
- US-A- 4 965 078
- RAMOS CABRAL SOFIA ET AL: "Optimization of Cheese Whey Ultrafiltration/Diafiltration for the Production of Beverage Liquid Protein Concentrates with Lactose Partially Removed", JOURNAL OF MEMBRANE SCIENCE AND RESEARCH, 1 January 2019 (2019-01-01), pages 172 - 177, XP093043014, Retrieved from the Internet <URL:https://www.msrjournal.com/article_33511_d797c16377b1498bb3fe153d37fedc89.pdf> [retrieved on 20230428], DOI: 10.22079/JMSR.2018.92367.1208
- BALDASSO CAMILA ET AL: "Ultrafiltration and diafiltration modeling for improved whey protein purification", SEPARATION SCIENCE AND TECHNOLOGY, vol. 57, no. 12, 5 January 2022 (2022-01-05), US, pages 1926 - 1935, XP093043025, ISSN: 0149-6395, DOI: 10.1080/01496395.2021.2021424
- ANONYMOUS: "Membrane filtration in the Dairy Industry", WWW.GEA.COM, 13 December 2016 (2016-12-13), pages 1 - 20, XP055501495, ISBN: 978-0-8155-1270-7, Retrieved from the Internet <URL:https://web.archive.org/web/20161213052657if_/http://www.gea.com:80/en/binaries/Membrane%20Filtration%20in%20the%20Dairy%20Industry_tcm11-18227.pdf> [retrieved on 20180822]
- MEHRA RAHUL ET AL: "Whey proteins processing and emergent derivatives: An insight perspective from constituents, bioactivities, functionalities to therapeutic applications", JOURNAL OF FUNCTIONAL FOODS, ELSEVIER BV, NL, vol. 87, 19 October 2021 (2021-10-19), XP086892874, ISSN: 1756-4646, [retrieved on 20211019], DOI: 10.1016/J.JFF.2021.104760

## Description

### Technical field of the invention

The present invention relates to a method of preparing a whey protein concentrate having a controlled mineral content. In particular, the present invention relates to controlling the mineral content in a whey protein concentrate by subjecting the whey to diafiltration with a diafiltration liquid comprising minerals, and wherein the diafiltration liquid comprises minerals in an amount different from the amount of minerals in the whey, and wherein the conductivity of the diafiltration liquid is at least 2.0mS/cm when measured using the Standard DIN EN 27888; and hereby obtaining a whey protein concentrate having a controlled mineral content.

### Background of the invention

Whey is one of the by-products from producing cheese where whey is drained from the cheese curd during cheese processing. The whey comprises proteins that have a high nutritional value. Besides, from whey proteins, whey also comprises other components such as ash, lactose, carbohydrates, organic acids, minerals, and non-protein nitrogen (NPN).

In the whey industry, the whey proteins are typically separated from the other components of whey in various degrees and processed into whey protein concentrate products. The separation processes used are typically membrane filtration processes, such as microfiltration, ultrafiltration, nanofiltration, and reverse osmosis. The whey protein products contain the majority of the whey proteins and various amounts of the other components such as ash, lactose, carbohydrates, organic acids, minerals, and NPN. BALDASSO CAMILA ET AL. discloses the preparation of purified whey protein concentrate by ultrafiltration and diafiltration of whey using distilled water as diafiltration liquid, thereby removing lactose and mineral salts.

However, the content of minerals in whey can vary dependent on the method used for preparing curd and whey. For example, if cheese is prepared by using acidifying agents (chemical or microbiological), the whey obtained typically has a high calcium content, i.e. a higher content than when whey is prepared without adding acidifying agents. It is a problem if different whey streams that are used for preparing whey protein concentrates have different mineral content, because it will result in whey protein concentrates having different mineral content and hence non-uniform products. In addition, it is a disadvantage if whey protein concentrates can only be prepared from the same type of whey and from the same dairy plant.

Hence, an improved method of preparing a whey protein concentrate from whey where the mineral content can be controlled would be advantageous.

### Summary of the invention

Thus, an object of the present invention relates to a method of preparing a whey protein concentrate having a controlled mineral content.

In particular, it is an object of the present invention to provide a method of preparing a whey protein concentrate having a controlled mineral content that solves the above mentioned problems known from the prior art. It is an object of the present invention to prepare uniform whey protein concentrates from different streams of whey, where the whey protein concentrate has a tailor-made mineral content independent of the mineral content of the whey used for preparing the whey protein concentrate. It is an object of the present invention to maintain minerals in the whey protein concentrate but to control the amounts of the different minerals in the whey protein concentrate. Hence, it is not the intention of the present invention to wash out all minerals from the whey protein concentrate.

The invention relates to a method of preparing a whey protein concentrate having a controlled mineral content, according to claim 1.

### Brief description of the figures

Figure 1 shows the calcium content based on the solid content for different whey streams.
Figure 2 shows the process of diafiltration of whey.

The present invention will now be described in more detail in the following.

### Detailed description of the invention

### Definitions

Prior to discussing the present invention in further details, the following terms and conventions will first be defined:
All references to singular characteristics or limitations of the present invention shall include the corresponding plural characteristic or limitation, and vice versa, unless otherwise specified or clearly implied to the contrary by the context in which the reference is made.

All percentages referred to herein are percentages by weight unless otherwise stated. Also, the terms "by weight of dry matter", "on dry matter basis" and "by weight of solid content" refer to the same concept and are used interchangeably.

Unless defined otherwise, all technical and scientific terms used herein have the same meaning as commonly understood by one of ordinary skill in the art.

Whey:
The term "whey" refers in the context of the present invention to the liquid obtained after cheese processing steps of milk, where casein in milk is precipitated and cheese curd and whey is obtained.

The whey can have different protein content dependent on how the milk used to prepare the cheese curd and whey is treated before processing into curd and whey. For example, the milk used to prepare the curd and whey can have been subjected to one or more membrane filtration steps before the cheese processing steps. For example, ultrafiltration of milk will concentrate the proteins and result in a whey having a higher protein content.

In the method according to the present invention, the protein content of the whey provided in step a) is not essential, and the whey can therefore have different content of protein.

In the method according to the present invention, the whey provided may also have different content of minerals and lactose. For example, the whey may have a higher calcium content than typically found in whey. Therefore, it would be an advantage to reduce the content of calcium when preparing a whey protein concentrate from said whey having a high content of calcium. In whey, calcium is typically present as both solubilised calcium, protein-bound calcium and as calcium precipitates. If for example the calcium content in whey is desired to be controlled according to the method of the present invention, it is the content of solubilised calcium in the whey that is controlled. However, it is the total calcium content that is measured in the examples. Without being bound by any theory, the inventors of the present invention believe that the diafiltration step in the method of the present invention besides from replacing solubilised calcium in the whey with solubilised calcium in the diafiltration liquid, also exchange some protein bound calcium during diafiltration. The term "solubilised calcium" refers in the context of the present invention to "free" calcium, i.e. calcium that is soluble in the liquid and not bound to any protein. The present invention should not be limited to preparing a whey protein concentrate from a whey having a specific calcium ratio, because the present invention can be used for preparing any whey protein concentrate from whey where the mineral content and/or mineral composition can be modified.

However, in a preferred embodiment of the invention, the whey provided in step a) comprises a content of total calcium in an amount by weight of the total solid content that is higher than the content of total calcium by weight of the solid content of the diafiltration liquid. The diafiltration liquid typically comprises only solubilised calcium and not protein bound calcium or precipitated calcium.

Preferably, the whey provided in step a) comprises a content of solubilised calcium in an amount by weight of the total solid content that is higher than the content of solubilised calcium by weight of the solid content of the diafiltration liquid.

In particular, the whey comprises a content of total calcium in an amount by weight of the total solid content being at least 5% higher than the content of total calcium by weight of the total solid content of the diafiltration liquid. In particular, the whey comprises a content of total calcium in an amount by weight of the total solid content being at least 10% higher than the content of total calcium content by weight of the solid content of the diafiltration liquid, such as at least 20% higher, preferably at least 15% higher.

In a preferred embodiment, the whey comprises a content of solubilised calcium in an amount by weight of the total solid content being at least 10% higher than the content of solubilised calcium by weight of the total solid content of the diafiltration liquid. In particular, the whey comprises a content of solubilised calcium in an amount by weight of the total solid content being at least 15% higher than the content of solubilised calcium content by weight of the solid content of the diafiltration liquid, such as at least 20% higher, preferably at least 25% higher.

Even though the present invention should not be limited to any specific amount of calcium present in the whey, the method of the invention in an embodiment provides whey comprising a content of total calcium in an amount of 0.70% by weight or more of the total solid content, such as in an amount of 0.75% by weight or more of the total solid content, preferably in an amount of 0.80% by weight or more of the total solid content. The amount of total calcium present in the whey is dependent on the whey used and can be in the range of 0.70% to 1.30% by weight of the total solid content, preferably in the range of 0.75% to 1.25% by weight of the total solid content, more preferably in the range of 0.80% to 1.20% by weight of the total solid content.

The total calcium content of the total solid content in the whey is typically dependent on the concentration of the whey, and therefore dependent on the protein content.

Hence, in an embodiment the method of the invention provides whey comprising a content of total calcium in an amount of 0.70% by weight or more of the total solid content when the protein content is 12-17% by weight of the solid content, such as in an amount of 0.75% by weight or more of the total solid content when the protein content is 12-17% by weight of the solid content, preferably in an amount of 0.80% by weight or more of the total solid content, when the protein content is 12-17% by weight of the solid content. The amount of total calcium present in the whey is dependent on the whey used and can be in the range of 0.70% to 1.30% by weight of the total solid content when the protein content is 12-17% by weight of the solid content, preferably in the range of 0.75% to 1.25% by weight of the total solid content when the protein content is 12-17% by weight of the solid content, more preferably in the range of 0.80% to 1.20% by weight of the total solid content when the protein content is 12-17% by weight of the solid content.

Defining the total calcium content in the whey as dependent on the whey protein content being 12-17% of the total solid content should not be seen as a limitation meaning that the whey can only comprise 12-17% protein. The whey could comprise more or less protein. For example, the whey could comprise a higher protein content if the milk used for preparing cheese curd and whey was concentrated before the cheese processing steps. Hence, in some other embodiments of the invention, the whey has a protein content of the total solid content that is higher than 12-17%, for example 20-40% by weight protein of the solid content.

However, the protein content of the whey is not critical and could be higher than 12-17% by weight, for example 25-40% by weight of the total solid content.

Therefore, in other embodiments of the invention, the whey comprises total calcium in an amount of 0.70% by weight or more of the total solid content when the protein content is 25-40% by weight of the solid content, such as in an amount of 0.75% by weight or more of the total solid content when the protein content is 25-35% by weight of the solid content, preferably in an amount of 0.80% by weight or more of the total solid content, when the protein content is 25-40% by weight of the solid content. The amount of total calcium present in the whey is dependent on the whey used and can be in the range of 0.70% to 1.30% by weight of the total solid content when the protein content is 25-40% by weight of the solid content, preferably in the range of 0.75% to 1.25% by weight of the total solid content when the protein content is 25-40% by weight of the solid content, more preferably in the range of 0.80% to 1.20% by weight of the total solid content when the protein content is 25-40% by weight of the solid content. The pH of the whey is not critical for the present invention, since any whey that has a mineral content that should be controlled or modified can be provided. However, typically the whey provided has a pH in the range of 4.6 to 6.5. This whey provided, which has a pH lower than the pH of milk, has typically either before or during the cheese processing steps been subjected to acidification.

When milk, such as for example skim milk, is subjected to acidification the calcium bound to the casein micelles of the milk is solubilised and released. Hereby, the content of free calcium in the milk is increased. When using said acidified milk for preparing cheese curd and whey by using cheese processing steps, cheese curd having a reduced calcium content is obtained. However, the content of calcium in the obtained whey will be higher than if there was no acidification.

In an embodiment of the invention, the pH of the whey is in the range of 5.0 to 6.5, such as a pH in the range of 5.5 to 6.5, preferably in the range of 5.7 to 6.2.

In an embodiment of the present invention, the whey provided in step a) is pasteurised before diafiltration in step b). Pasteurisation of the whey may take place under standard conditions, namely, heat treatment of the whey at a temperature and time sufficient to kill pathogens, typically at 72°C for 15 seconds.

The whey provided in step a) may in an embodiment of the invention further be subjected to pH adjustment before diafiltration in step b). The pH adjustment is preferably adjustment of the pH to a pH in the range of 4.6-6.5. The pH adjustment can be by addition of any food grade acids and/or bases.

Any food grade base typically used for food products may be used, for example sodium hydroxide, potassium hydroxide, or mixtures thereof.

Food grade acids that can be used for pH adjustment are, for example, organic acids, such as citric acid, malic acid, tartaric acid, acetic acid, oxalic acid, lactic acid, tannic acid, glucono delta lactone, phosphoric acid, and sulphuric acid, hydrochloric acid and other food grade acids. The pH adjustment may also be by adding carbon dioxide into the whey. Preferably, the pH adjustment is with one or more selected from the group consisting of citric acid, lactic acid, acetic acid, hydrochloric acid and carbon dioxide.

During pasteurisation, some calcium may precipitate as calcium precipitates. If calcium is precipitated, it is desired to dissolve calcium by lowering the pH with this pH adjustment step.

In a further embodiment, the whey provided in step a) is diluted with water before diafiltration. Whey is diluted with water to avoid precipitation. Hence, in some embodiments of the invention, whey is diluted with water to obtain a calcium concentrate where calcium does not precipitate. The calcium content in the whey should preferably be 0.10% by weight or lower. If not, the whey is typically diluted with water to obtain a calcium content of 0.10% by weight or lower.

The whey could also be diluted to obtain a solid content in the range of 2-8% by weight, preferably a solid content in the range of 4-6% by weight.

The whey provided in step a) is obtained directly as a side-stream from the production of cheese when cheese curd is obtained by coagulation of casein in milk. The whey can be drained from the cheese curd and used for preparing the whey protein concentrate of the invention. However, the whey can be obtained from different processes of preparing cheese curd. Typically, the curd and whey are obtained by subjecting milk or a milk ultrafiltration retentate to cheese processing steps to obtain cheese curd and whey. The cheese curd is subsequently processed into cheese. For example, when preparing a pasta filata cheese, the cheese curd is heated and stretched into the pasta filata cheese.

The cheese processing steps typically comprise adding coagulation agents to milk or milk ultrafiltration retentate, such as coagulation enzyme(s). The coagulation enzyme(s) cuts caseinoglycomacropeptide (cGMP) from casein such that casein becomes more hydrophobic and can adhere (stick together) to each other.

The coagulation enzyme may be any enzyme that has (kappa)-caseinolytic activity and that when used in an effective amount is capable of coagulating milk such that curd is obtained. For example, the coagulating enzyme is rennet, chymosin, pepsin, microbial rennet, recombined rennet, and any other suitable microbial or vegetable derived protease with catalytic activity or a combination thereof. Preferably, the coagulating enzyme is any type of rennet and may therefore be selected from the group of rennet, microbial rennet and recombined rennet.

The coagulating enzyme may be used alone to prepare cheese curd or may be used in combination with a starter culture and/or a food grade acid. The starter culture is typically a lactic acid producing microorganism.

In an embodiment of the present invention, the whey provided in step a) is obtained by the following method steps:
i) providing a dairy milk product;
ii) subjecting the dairy milk product to ultrafiltration to obtain a milk ultrafiltration retentate and a milk ultrafiltration permeate;
iii) adding a food grade acid to the milk ultrafiltration retentate from step ii) to adjust the pH of the milk ultrafiltration retentate to be in the range of 4.6 to 6.5;
iv) subjecting the acidified milk ultrafiltration retentate of step iii) to a second ultrafiltration to provide a second milk acidified ultrafiltration retentate and a second milk acidified ultrafiltration permeate;
v) subjecting the second milk acidified ultrafiltration retentate to cheese processing steps to obtain cheese curd and whey;
vi) separating the obtained whey from the cheese curd.

The whey obtained will be acidic (pH 4.6-6.5) and has a higher calcium content than if the milk had not been subjected to acidification. The pH adjustment in step iii) is preferably to a pH in the range of 5.7 to 6.2.

The dairy milk product is typically whole milk, low-fat milk, reduced fat milk, fat-free milk (skimmed milk) or heat-treated milk.

The milk ultrafiltration permeate obtained in step ii) may be used as the diafiltration liquid in the method of the present invention.

The term "food grade acid" refers in the context of the present invention to an acid suitable for human consumption. Examples of food grade acids are, for example, organic acids, such as citric acid, malic acid, tartaric acid, acetic acid, oxalic acid, lactic acid, tannic acid, glucono delta lactone, phosphoric acid, sulphuric acid, hydrochloric acid and other food grade acids. Carbon dioxide may also be used for acidification. Hence, one or more of these food grade acids may be used in step iii). Food grade acids may also be referred to as edible acids, and the terms are used interchangeably herein.

Preferably, the one or more food grade acids used are one or more selected from the group consisting of citric acid, lactic acid, acetic acid, and carbon dioxide.

The term "cheese processing steps" refers to addition of coagulation agents to obtain curd and whey.

In another embodiment of the present invention, the whey provided in step a) is obtained by the following method steps:
i) providing a dairy milk product;
ii) subjecting the dairy milk product to ultrafiltration to obtain a milk ultrafiltration retentate and a milk ultrafiltration permeate;
iii) optionally subjecting the milk ultrafiltration retentate from step ii) to fat standardization, in particular by adding cream;
iv) adding a food grade acid and subjecting the milk ultrafiltration retentate of step ii) or the fat standardized milk ultrafiltration retentate of step iii) to cheese processing steps to obtain cheese curd and whey;
v) separating the obtained whey from the cheese curd.

The cheese processing steps may comprise addition of coagulation enzymes or a combination of adding coagulation enzymes, starter culture, and/or a food grade acid. The food grade acid may be any of the food grade acids earlier mentioned and the food grade acid is added to adjust the pH to be in the range of 4.6 to 6.5, preferably in the range of 5.0 to 6.0, and more preferably in the range of 5.7 to 5.8.

The dairy milk product is typically whole milk, low-fat milk, reduced fat milk, fat-free milk (skimmed milk) or heat-treated milk.

The milk ultrafiltration permeate obtained in step ii) may be used as the diafiltration liquid in the method of the present invention.

### Diafiltration:

In the method according to the present invention, the whey provided is subjected to diafiltration with a diafiltration liquid comprising minerals, wherein the diafiltration liquid comprises minerals in an amount different from the amount of minerals in the whey, and wherein the conductivity of the diafiltration liquid is at least 2.0mS/cm.

In the context of the present invention, the term "diafiltration" refers to filtration with addition of a diafiltration liquid.

The term "ultrafiltration" refers in the context of the present invention to filtration without addition of any liquid. Hence, ultrafiltration will purely serve as concentration of the non-permeable content, such as concentration of proteins, in the retentate. Furthermore, ultrafiltration refers to filtration with an ultrafiltration membrane.

In a preferred embodiment of the invention, the diafiltration is with an ultrafiltration membrane.

The ultrafiltration membrane used preferably has a molecular weight cut-off (MWCO) in the range of 1,000 to 500,000 Daltons, such as in the range of 2,000 to 100,000 Daltons, preferably in the range of 3,000 to 50,000 Daltons, and most preferably in the range of 3,000 to 20,000 Daltons.

The method of the present invention should not be limited to any particular material of the membrane used for diafiltration. It may, for example, be a membrane made of polysulphone (PSU), polyethersulphone (PES), polypropylene (PP), polyvinylidine fluoride (PVDF), polyacrylonitrile (PAN), Polyamide(PA), Cellulose acetate (CA), regenerated CA or other materials typically used for making ultrafiltration membranes.

The diafiltration in step b) of the method according to the present invention typically comprises one or more diafiltration steps. By "diafiltration step" is meant the step of 1) adding a diafiltration liquid and 2) performing filtration (ultrafiltration). This diafiltration step can be repeated with a series of diafiltration steps. The diafiltration step may also be referred to as a loop of diafiltration.

In an embodiment of the invention, the diafiltration comprises two or more diafiltration steps, such as three or more diafiltration steps and preferably four or more diafiltration steps.

By repeating the diafiltration steps several times, it is possible to change the content of minerals in the whey protein concentrate (WPC) obtained such that the mineral content is adjusted in the WPC retentate. At the same time, the protein content is either decreased, unchanged or increased which depends on the amount of the diafiltration liquid used. However, the present invention controls the mineral content such that there are still minerals in the WPC obtained, but the content of the minerals is changed. The present invention will not wash out minerals from the WPC by washing with water.

### Ultrafiltration:

The method according to the present invention may also comprise ultrafiltration of the whey provided and/or diafiltrated whey.

Typically, the whey protein concentrate will be prepared by using a combination of ultrafiltration and diafiltration. The ultrafiltration may be before diafiltration or after diafiltration, and in some embodiments of the invention, the ultrafiltration is both before and after diafiltration.

The ultrafiltration will be performed using an ultrafiltration membrane, preferably a membrane having molecular weight cut-off (MWCO) in the range of 1,000 to 500,000 Daltons, such as in the range of 2,000 to 100,000 Daltons, preferably in the range of 3,000 to 50,000 Daltons, and most preferably in the range of 3,000 to 20,000 Daltons.

The method of the present invention should not be limited to any particular material of the membrane used for ultrafiltration. It may, for example, be a membrane made of polysulphone (PSU), polyethersulphone (PES), polypropylene (PP), polyvinylidine fluoride (PVDF), polyacrylonitrile (PAN), Polyamide(PA), Cellulose acetate (CA), regenerated CA or other materials typically used for making ultrafiltration membranes.

The membrane used for ultrafiltration and diafiltration may be the same membrane or different membranes. This is not to be seen as a limitation of the invention. However, preferably the membrane used for ultrafiltration and diafiltration is the same ultrafiltration membrane.

The membrane is preferably a polyethersulphone membrane having a MWCO of 5000 Dalton.

The ultrafiltration typically comprises one or more ultrafiltration steps. By "ultrafiltration step" is meant the step of subjecting whey to ultrafiltration to obtain a whey ultrafiltration retentate and a whey ultrafiltration permeate. Hereafter, a second step of ultrafiltration can be performed on the ultrafiltration retentate to obtain a second ultrafiltration retentate. Hence, the ultrafiltration can be repeated with a series of ultrafiltration steps (loops) or as a batch process (single step).

In an embodiment of the invention, the ultrafiltration comprises two or more ultrafiltration steps, such as three or more ultrafiltration steps and preferably four or more ultrafiltration steps.

By repeating the ultrafiltration steps several times, it is possible to concentrate the protein content in the whey protein concentrate to a high protein content. Every time the ultrafiltration step is repeated, the protein content in the whey protein concentrate becomes higher.

### Diafiltration liquid:

An aspect of the present invention is to subject whey to diafiltration with a diafiltration liquid comprising minerals, and wherein the diafiltration liquid comprises minerals in an amount different from the amount of minerals in the whey, and wherein the conductivity of the diafiltration liquid is at least 2.0mS/cm. By diafiltration with a liquid that has a different composition of minerals than the whey, it is possible to obtain a whey protein concentrate with an amended mineral composition. Hence, it is possible to control the mineral content of the whey protein concentrate. The diafiltration liquid used in the present invention will comprise a certain amount of minerals and will therefore have a conductivity being at least 2.0mS/cm. That the conductivity of the diafiltration liquid is above 2.0mS/cm means that the diafiltration liquid is not water.

Therefore, the diafiltration liquid according to the present invention does not include water since water has minor mineral content and therefore very low conductivity. Demineralised water has a conductivity of less than 0.01mS/cm and tap water has a conductivity of less than 0.6mS/cm.

In the context of the present invention, the term "controlling mineral content" means that the composition of minerals can be controlled, but that that the whey protein concentrate still comprises minerals. For example, it is possible to change the composition of minerals in the whey protein concentrate by diafiltration with a diafiltration liquid having another mineral composition than the whey used for preparing the whey protein concentrate. The term "controlling mineral content" does not include washing out all minerals from the whey protein concentrate. Washing out minerals from a whey protein concentrate is typically made by diafiltration with water.

In an embodiment of the present invention, the diafiltration liquid has a conductivity of at least 4.0mS/cm, such as at least 5mS/cm, preferably at least 7.0mS/cm and most preferably at least 8mS/cm.

In another embodiment of the invention, the diafiltration liquid has a conductivity in the range of 2.0 to 50mS/cm, such as in the range of 4.0 to 45mS/cm, preferably in the range of 5.0 to 40mS/cm and even more preferably in the range of 8.0 to 30mS/cm.

In another embodiment of the present invention, the degrees Brix of the diafiltration liquid is at least 1.0°bx, such as at least 1.5°bx, preferably at least 2.0°bx and more preferably at least 5.0°bx. On the contrary, the degrees Brix of tap water and demineralized water is about 0°bx. Hence, that the degrees Brix is above 1.0°bx means that the diafiltration liquid is not water.

The term "degrees Brix" refers to the content of soluble components of an aqueous solution. The degrees Brix may also be referred to as "°Bx". In the dairy industry, the degree of Brix is used as an indicator for the soluble dry matter content. Soluble components all contribute to the measured degree of Brix, such as lactose, proteins, and minerals.

Hence, the measurement of "degrees Brix" is an alternative method of measuring dissolved solids in a liquid, i.e. the solid content in a liquid. 1°Bx is equal to about 1 gram of sugar (e.g. sucrose or lactose) in 100 gram of a solution and represents the strength of the solution as percentage by mass. However, in the liquid dairy stream used in the method of the present invention, other dissolved solids than pure lactose, including minerals and citric acid, is dissolved therein. Therefore, the °Bx is not equivalent to the solid content, but close to. In the context of the present invention, the degrees Brix have been measured to indicate the solid content, because the method of measuring °Bx is faster than the method of measuring the total solid content.

In the context of the present invention, 1°Bx corresponds to 0.9 to 1.0 gram of solids in 100 gram in the liquid dairy stream. In particular, 1°Bx corresponds to 0.92 to 0.99 gram solids in the liquid dairy stream.

In a further embodiment of the present invention, the degrees brix if the diafiltration liquid is in the range of 1.0 to 30°Bx.

In one embodiment of the invention, the diafiltration liquid has a lower content of solubilised calcium than the content of solubilised calcium present in the whey, but has the same or higher amount of monovalent cations. Hereby, a whey protein concentrate is obtained having a reduced calcium content as compared to the whey used for preparing the whey protein concentrate. This would be an advantage if a whey protein concentrate is prepared from a whey with a higher total calcium content than normal, i.e. a total calcium content higher than 0.70% by weight of the total solid content.

Another suitable diafiltration liquid is a diafiltration liquid with a lower content of solubilised calcium than present in the whey, but with an increased content of one or more monovalent cations, for example sodium. This diafiltration liquid would provide advantages if it is desired to reduce the total/solubilised calcium content, but increase the content of monovalent cations in a whey protein concentrate.

The diafiltration liquid according to the present invention comprises minerals and has conductivity of at least 2.0mS/cm and therefore the diafiltration liquid does not cover water. Hence, the diafiltration liquid is not water. This does not exclude the use of diafiltration with water in the method of preparing the whey protein concentrate of the invention but means that the whey at least has to be subjected to one or more diafiltration steps with a diafiltration liquid comprising minerals. It is important that diafiltration is with a mineral containing liquid, since if only water is used for diafiltration some solubilised minerals are exchanged that is not wished exchanged. This is not desired. It is important that the diafiltration liquid is a suitable mineral containing liquid such that the mineral content in the retentate can be controlled. As previously disclosed, it is an object of the present invention to maintain minerals in the whey protein concentrate and not wash out the minerals, but it is an object of the present invention to control the mineral content.

The method according to the present invention therefore comprises ultrafiltration and diafiltration with the diafiltration liquid comprising minerals according to the invention. However, besides from diafiltration with a diafiltration liquid that comprises minerals and has a conductivity of at least 2.0mS/cm, the method could include a further diafiltration step where diafiltration is with water. Diafiltration with water, if applied in the method of the present invention, is typically one of the final membrane filtration steps performed. Diafiltration with water is used to lower the viscosity of the whey protein concentrate and to obtain a desired protein content of the solid content.

In an embodiment of the present invention, the diafiltration liquid comprises solubilised calcium in an amount different from the amount of solubilised calcium in the whey. The diafiltration liquid preferably comprises solubilised calcium in an amount lower than the amount of solubilised calcium in the whey, such as in an amount at least 5% by weight lower than the amount in the whey, preferably at least 10% by weight lower than the amount in the whey and most preferably the diafiltration liquid comprises solubilised calcium in an amount at least 15% by weight lower than the amount in whey.

In a further embodiment of the present invention, the diafiltration liquid comprises total calcium of the solid content in an amount similar to the amount of total calcium of the solid content in a milk ultrafiltration permeate.

The calcium present in the diafiltration liquid is typically only solubilised calcium.

The term "milk ultrafiltration permeate" refers in the context of the present invention to the permeate obtained by subjecting milk to ultrafiltration. The milk may be any type of milk, such as whole milk, low-fat milk, reduced fat milk, fat-free milk (skimmed milk), heat-treated milk (e.g. pasteurised milk, and UHT milk) and combinations thereof, preferably skimmed milk.

In another embodiment of the present invention, the diafiltration liquid comprises total calcium in an amount of 0.80% by weight or less of the total solid content. Preferably, the diafiltration liquid has a total calcium content of 0.75% by weight or less, most preferably a total calcium content of 0.70% by weight or less of the total solid content.

In a preferred embodiment of the present invention, the diafiltration liquid is selected from the group consisting of a milk ultrafiltration permeate, a whey ultrafiltration permeate, a nanofiltration retentate of a milk ultrafiltration permeate, a nanofiltration permeate of a milk ultrafiltration permeate, a nanofiltration retentate of a whey ultrafiltration permeate, a reverse osmosis retentate of a milk ultrafiltration permeate, a reverse osmosis retentate of a whey ultrafiltration permeate and a solution of minerals in water.

The solution of minerals in water will not include water as such since it must also have a conductivity of at least 2.0mS/cm as the other diafiltration liquids.

Any of the above mentioned diafiltration liquids are suitable for use.

In a more preferred embodiment of the present invention, the diafiltration liquid is selected from the group consisting of a milk ultrafiltration permeate, a whey ultrafiltration permeate, a nanofiltration retentate of a milk ultrafiltration permeate, a nanofiltration permeate of a milk ultrafiltration permeate, a nanofiltration retentate of a whey ultrafiltration permeate, a reverse osmosis retentate of a milk ultrafiltration permeate, and a reverse osmosis retentate of a whey ultrafiltration permeate.

The term "whey ultrafiltration permeate" refers in the context of the present invention to the permeate obtained by subjecting a whey to ultrafiltration. The whey in the whey ultrafiltration permeate is not the same whey as provided in the present invention. Furthermore, the whey ultrafiltration permeate must have a mineral content different from the whey provided in the method according to the invention.

The term "a nanofiltration retentate of a milk ultrafiltration permeate" refers in the context of the present invention to the retentate obtained by nanofiltration of a milk ultrafiltration retentate.

The term "a nanofiltration retentate of a whey ultrafiltration permeate" refers in the context of the present invention to the retentate obtained by nanofiltration of a whey ultrafiltration permeate.

The term "a reverse osmosis retentate of a milk ultrafiltration permeate" refers in the context of the present invention to the retentate obtained by reverse osmosis filtration of a milk ultrafiltration permeate.

The term "a reverse osmosis retentate of a whey ultrafiltration permeate" refers in the context of the present invention to the retentate obtained by reverse osmosis filtration of a whey ultrafiltration permeate.

In the context of the present invention, the "solution of minerals in water" can be any solution of minerals in water that has a conductivity of at least 2.0mS/cm and is not limited to any particular solution or to any particular mineral content in the solution. Further, the solution is not limited to any specific amount of specific minerals, but the mineral content in the solution of minerals should be different from the mineral content in whey. Preferably, the solubilised calcium content in the solution is different from the solubilised calcium content in the whey provided in the method of the invention. More preferably, the solubilised calcium content in the solution is lower than the solubilised calcium content in the whey provided, such as at least 5% by weight lower, such as at least 10% by weight lower, preferably at least 15% by weight lower.

It should be noted that embodiments and features described in the context of one of the aspects of the present invention also apply to the other aspects of the invention.

The invention will now be described in further details in the following non-limiting examples.

### Examples

### Example 1 - analysis of a whey with high calcium content:

The purpose of this example is to show the difference in the mineral content in different whey compositions. The example shows the difference between the mineral content in the same type of whey and the difference between a whey composition with high calcium content "High calcium whey" and a whey composition with low calcium content, and the resulting whey protein concentrates.

12 samples of a whey with high calcium content was analysed with respect to the content of different ingredient.

Materials and methods:
The analytical methods disclosed in table 1 below were used to analyse the samples. The analyses was made by the Laboratory at Denmark Protein, Sønderupvej 26, 6920 Videbæk, Denmark.

**Table 1:**

| Parameter | Description | Unit | Method |
|---|---|---|---|
| Calcium | Calcium, ICP | %-wt | AOAC984.27, mod. |
| Potassium | Potassium, ICP | %-wt | AOAC984.27, mod. |
| Magnesium | Magnesium, ICP | %-wt | AOAC984.27, mod. |
| Sodium | Sodium, ICP | %-wt | AOAC984.27, mod. |
| Phosphor | Phosphor, ICP | %-wt | AOAC984.27, mod. |
| Chloride | Chloride, potentiometric titration | %-wt | ISO 5943/IDF 88, fourth edition, 2006-10-01 |
| Ash | Ash by 525°C | %-wt | NMKL 172 2^{nd} Ed. 2005 |
| Fat | Fat, Röse Gottlieb | %-wt | ISO 1736 /IDF9:2008 - Dried milk and dried milk products - Determination of fat content - Gravimetric method (reference method) |
| Sulphonated Ash | | %-wt | EUROPEAN PHARMACOPOEIA 7.0 5.0 - determination of ash (reference method) |
| pH | | - | IDF 115/ISO5546 2^{nd} Ed. 2010-06-01 (modified) |
| Total protein | Protein Nitrogen Kjeldahl | %-wt | ISO8968-3:2004(E)/IDF 20-3:2004 Determination of nitrogen content. Block digestion method (semi-microrapid routine method) ISO8968-3:2007/IDF 20-7:2007 |
| Non-Protein Nitrogen (NPN) | Non Protein Nitrogen Kjeldahl | %-wt | ISO8968-1:2001/IDF 20-4:2001 Determination of Nitrogen content. Determination of non-protein nitrogen content |
| Total solids | Total solids measured at 102°C | %-wt | ISO6731:2010(E)/IDF 21:2010 (E) modified "Milk, cream and evaporated milk. Determination of the total solid content" |
| Citric acid | Citric acid, enzymatic | %-wt | Boehringer Mannheim, test-kit, cat No. 10139076 035 |
| Galactose | Galactose, enzymatic | %-wt | DS/ISO 5765-2:2002, IDF79-2, first Ed. 2002-09-01 Dried Milk, Dried Ice-mixes & processed cheese - Determination of lactose content, Exnymatic methods, Boehringer Mannheim test-kit, Cat. No. 176 303, modified - Carrez I and II, NaOH |
| Lactose | Lactose, enzymatic | %-wt | DS/ISO 5765-2:2002, IDF 79-2, first Ed. 2002-09-01. Dried Milk, Dried Ice-mixes & processed cheese - Determination of lactose content, Exnymatic methods, Boehringer Mannheim test-kit, Cat. No. 176 303, modified - Carrez I and II, NaOH |
| Lactose corrugated for galactose | Lactose, enzymatic | %-wt | DS/ISO 5765-2:2002, IDF 79-2, first Ed. 2002-09-01. Dried Milk, Dried Ice-mixes & processed cheese - Determination of lactose content, Exnymatic methods, Boehringer Mannheim test-kit, Cat. No. 176 303, modified - Carrez I and II, NaOH |
| Lactic acid | Lactic acid, enzymatic | %-wt | ISO8069, IDF 69, 2005-09-15, modified sample preparation. Sample preparation as described in Boehringer Mannheim / R-biopharm kit desription |

The composition of the 12 samples of a whey with a high calcium content is disclosed in table 2 below. The 12 samples are referred to as S1, S2, S3 etc. The percentage is by weight.

The whey having a high calcium content is obtained by subjecting skim milk to ultrafiltration, followed by pH adjustment to pH 5.5-6.1 of the ultrafiltration retentate, and subjecting the acidified ultrafiltration retentate to a second ultrafiltration step. Rennet is added to the second ultrafiltration retentate such that cheese curd and whey having a protein concentration of about 28% of the solid content is obtained.

**Table 2:**

| | Unit | S1 | S2 | S3 | S4 | S5 | S6 | S7 | S8 | S9 | S10 | S11 | S12 |
|---|---|---|---|---|---|---|---|---|---|---|---|---|---|
| Ash | % | 0.580 | 0.660 | 0.620 | 0.710 | 0.660 | 0.740 | 0.670 | 0.660 | 0.700 | 0.610 | 0.620 | 0.680 |
| Calcium | % | 0.070 | 0.083 | 0.085 | 0.089 | 0.089 | 0.103 | 0.090 | 0.099 | 0.094 | 0.089 | 0.082 | 0.090 |
| Chloride | % | 0.080 | 0.080 | 0.070 | 0.080 | 0.080 | 0.080 | 0.090 | | | | | |
| Fat | % | 0.140 | 0.120 | 0.150 | 0.160 | 0.150 | 0.170 | 0.170 | 0.110 | 0.110 | 0.120 | 0.130 | 0.110 |
| Potassium | % | 0.144 | 0.155 | 0.142 | 0.161 | 0.159 | 0.181 | 0.167 | 0.156 | 0.155 | 0.161 | 0.153 | 0.163 |
| Magnesium | % | 0.011 | 0.011 | 0.011 | 0.012 | 0.012 | 0.013 | 0.013 | 0.012 | 0.012 | 0.011 | 0.010 | 0.011 |
| Sodium | % | 0.037 | 0.041 | 0.036 | 0.041 | 0.040 | 0.046 | 0.045 | 0.038 | 0.038 | 0.035 | 0.034 | 0.036 |
| NPN | % | 0.050 | 0.050 | 0.050 | | 0.050 | | | | | | | |
| pH | | 6.080 | 6.050 | 5.590 | 5.970 | 6.010 | 5.950 | 5.960 | 6.010 | 5.830 | 6.030 | 6.050 | 6.010 |
| Phosphor | % | 0.057 | 0.068 | 0.061 | 0.067 | 0.065 | 0.076 | 0.070 | 0.070 | 0.067 | 0.068 | 0.066 | 0.068 |
| Protein | % | 2.150 | 2.370 | 2.140 | 2.410 | 2.490 | 2.780 | 2.680 | 2.330 | 2.400 | 2.500 | 2.470 | 2.390 |
| Total solids | % | 7.590 | 8.430 | 7.540 | 8.520 | 8.610 | 9.760 | 9.330 | 8.600 | 8.090 | 8.650 | 8.600 | 8.920 |
| Citric acid | % | 0.270 | 0.340 | 0.270 | 0.310 | 0.360 | 0.400 | 0.390 | | | | | |
| Galactose | % | 0.020 | 0.020 | 0.020 | 0.020 | 0.020 | 0.020 | 0.020 | | | | | |
| Lactose | % | 4.420 | 4.860 | 4.340 | 4.990 | 5.040 | 5.460 | 5.220 | 4.880 | 5.170 | 5.200 | 4.850 | 5.120 |
| Lactic acid | % | 0.090 | 0.090 | 0.090 | 0.090 | 0.090 | 0.090 | 0.090 | | | | | |
| Ash | %-TS | 7.642 | 7.711 | 8.223 | 8.333 | 7.666 | 7.582 | 7.181 | 7.674 | 8.653 | 7.052 | 7.209 | 7.735 |
| Calcium | %-TS | 0.927 | 0.980 | 1.127 | 1.089 | 1.033 | 1.059 | 0.968 | 1.152 | 1.160 | 1.081 | 0.958 | 1.010 |
| Potassium | %-TS | 1.900 | 1.833 | 1.879 | 1.887 | 1.850 | 1.852 | 1.785 | 1.816 | 1.921 | 1.857 | 1.779 | 1.822 |
| Magnesium | %-TS | 0.139 | 0.131 | 0.139 | 0.139 | 0.137 | 0.137 | 0.136 | 0.136 | 0.143 | 0.125 | 0.120 | 0.123 |
| Sodium | %-TS | 0.487 | 0.481 | 0.475 | 0.480 | 0.468 | 0.470 | 0.481 | 0.448 | 0.464 | 0.409 | 0.398 | 0.402 |
| Phosphor | %-TS | 0.754 | 0.807 | 0.808 | 0.781 | 0.759 | 0.775 | 0.750 | 0.817 | 0.833 | 0.785 | 0.772 | 0.775 |
| Protein | %-TS | 28.33 | 28.11 | 28.38 | 28.29 | 28.45 | 28.49 | 28.73 | 27.09 | 29.67 | 28.90 | 28.72 | 26.80 |

Hence, the content of the various minerals in the whey samples are different. In particular, the calcium content in the whey streams S1-S12 comprises a calcium content of the total solid content in the range of 0.927 to 1.127. Hence, there is a variation in the content of calcium. The calcium content measured is the total calcium content in the whey.

The calcium content in the samples S1-S12 is very high which is not obvious when looking at the calcium content in percentage of the total solid content. Therefore, the calcium content of the samples S1 to S12 were compared to the calcium content in a conventional whey (no acidification and no ultrafiltration). To make the comparison of the calcium content between different types of whey streams, the whey streams compared need to have the same protein content of the total solid content.

The conventional prepared whey streams typically has a protein content of about 13% where the whey stream with a high calcium content prepared as disclose above has a protein content of about 28% by weight of the solid content. Hence, to compare the whey streams, the conventional whey having a low calcium content and the whey stream having a high calcium content have been ultrafiltration to obtain the same protein content, namely concentrated to a protein content of 70% by weight.

In table 3 below, compositions of the high calcium whey protein concentrate (samples T1 - T9) and the low calcium whey protein concentrates (conventional) (samples T10 - T14) are compared.

Sample 1 is referred to as T1, sample 2 is referred to as T2 etc.

**Table 3:**

| | Conventional whey WPC 70 - low calcium content | | | | | | | High calcium WPC70 | | | | | | |
|---|---|---|---|---|---|---|---|---|---|---|---|---|---|---|
| | T1 | T2 | T3 | T4 | T5 | T6 | T7 | T8 | T9 | T10 | T11 | T12 | T13 | T14 |
| Ash (%) | 0.290 | 0.300 | 0.960 | 1.000 | 0.960 | | | | 0.220 | 0.980 | 1.080 | 0.570 | 1.010 | 1.050 |
| Calcium (%) | 0.045 | 0.044 | 0.124 | 0.119 | 0.122 | 0.127 | 0.031 | 0.032 | 0.026 | 0.163 | 0.188 | 0.133 | 0.170 | 0.182 |
| Potassium (%) | 0.071 | 0.074 | 0.225 | 0.224 | 0.240 | 0.229 | 0.062 | 0.060 | 0.068 | 0.184 | 0.225 | 0.140 | 0.216 | 0.239 |
| Magnesium (%) | 0.007 | 0.007 | 0.021 | 0.021 | 0.021 | 0.022 | 0.006 | 0.006 | 0.005 | 0.019 | 0.022 | 0.013 | 0.020 | 0.021 |
| Sodium (%) | 0.017 | 0.018 | 0.051 | 0.049 | 0.052 | 0.052 | 0.014 | 0.014 | 0.011 | 0.044 | 0.052 | 0.030 | 0.048 | 0.051 |
| pH | | | 6.430 | 6.360 | 6.380 | | | | | 5.960 | 5.860 | 6.000 | 5.920 | 5.930 |
| Phosphor (%) | 0.033 | 0.033 | 0.097 | 0.094 | 0.097 | 0.105 | 0.026 | 0.026 | 0.021 | 0.101 | 0.118 | 0.075 | 0.123 | 0.117 |
| Protein (%) | 6.490 | 6.570 | 19.58 | 19.65 | 19.69 | 19.35 | 4.690 | 4.780 | 4.250 | 17.32 | 18.82 | 12.18 | 19.76 | 19.44 |
| Total solids (%) | 9.090 | 9.180 | 27.42 | 27.12 | 27.43 | 26.76 | 6.530 | 6.689 | 6.080 | 24.11 | 26.39 | 16.94 | 27.52 | 27.91 |
| Ash (%-TS) | 3.190 | 3.268 | 3.501 | 3.687 | 3.463 | | | | 3.630 | 3.857 | 4.092 | 3.365 | 3.670 | 3.762 |
| Calcium (%-TS) | 0.491 | 0.483 | 0.450 | 0.439 | 0.443 | 0.475 | 0.475 | 0.447 | 0.432 | 0.677 | 0.712 | 0.668 | 0.619 | 0.652 |
| Potassium (%-TS) | 0.778 | 0.808 | 0.821 | 0.824 | 0.875 | 0.856 | 0.943 | 0.892 | 0.789 | 0.765 | 0.852 | 0.826 | 0.786 | 0.855 |
| Magnesium (%-S) | 0.081 | 0.080 | 0.077 | 0.077 | 0.078 | 0.081 | 0.085 | 0.086 | 0.077 | 0.078 | 0.084 | 0.075 | 0.075 | 0.076 |
| Sodium (%-TS) | 0.185 | 0.192 | 0.185 | 0.182 | 0.191 | 0.192 | 0.214 | 0.207 | 0.186 | 0.182 | 0.198 | 0.178 | 0.173 | 0.181 |
| Phosphor (%-TS) | 0.359 | 0.356 | 0.355 | 0.346 | 0.354 | 0.392 | 0.395 | 0.395 | 0.339 | 0.418 | 0.446 | 0.443 | 0.448 | 0.420 |
| Protein (%-TS) | 71.39 | 71.56 | 71.44 | 72.45 | 71.78 | 72.30 | 71.82 | 71.45 | 70.13 | 71.83 | 71.31 | 71.90 | 71.80 | 69.65 |

Hence, table 3 shows that the calcium content can vary in whey protein concentrates obtained from different sources of whey. In particular, table 1 shows that the calcium content in whey protein concentrates obtained from a whey having low calcium content (obtained by no acidification of milk) (samples T10-T14) have a calcium content by weight of the total solid content of about 0.432% to 0.491%. On the contrary, whey protein concentrates obtained by acidifying milk and subjecting the milk to ultrafiltration (samples T1-T9) have a higher calcium content, namely 0.619 to 0.712% by weight of the total solid content.

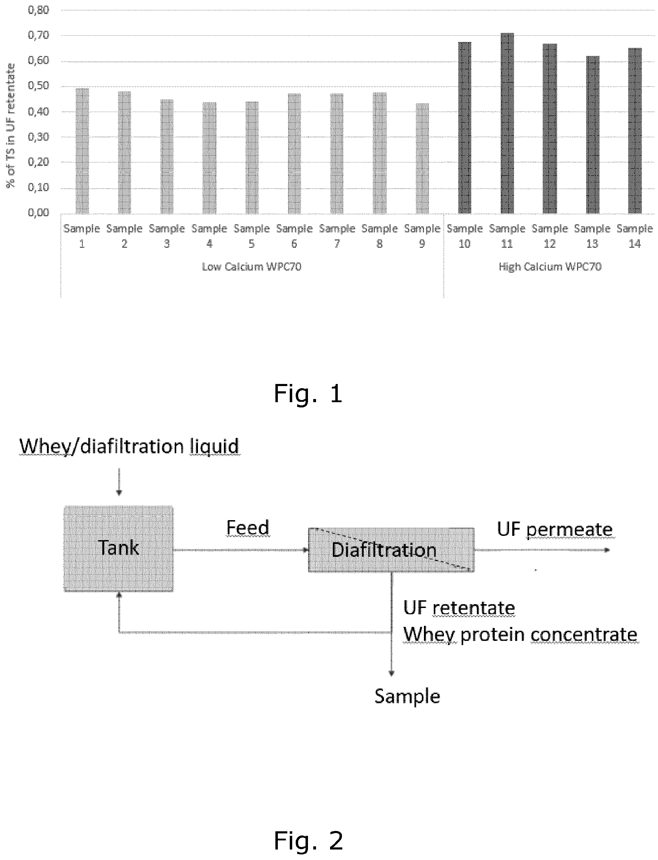

Figure 1 shows the calcium content of the different sample T1-T14. The sample 1 is sample T1, sample 2 is sample T2 etc.

From figure 1, it can be concluded that the whey protein concentrates obtained from the whey stream with a high calcium content has a significantly different mineral composition as compared to the whey protein concentrate obtained from a whey stream having a low calcium content. It will be a problem in the manufacturing of downstream fractionated protein products if the mineral content, especially the calcium content, varies.

### Example 2: Diafiltration of whey with milk permeate:

The purpose of this example is to show how the mineral content in a whey protein concentrate can be controlled by using a specific diafiltration liquid during diafiltration.

The diafiltration was made with an ultrafiltration membrane from Alfa Laval, GR82PE.

The diafiltration was performed as a batch process as disclosed in figure 2.

The concentration examples includes a combination of ultrafiltration, diafiltration with water and diafiltration with a diafiltration liquid of the invention comprising minerals.

The concentration in the example included the following steps:
Step 1: Initial concentration of the whey by ultrafiltration with no addition of liquid where whey is added to the tank - ultrafiltration is carried out until the protein content is 80%
Step 2: Diafiltration of the UF retentate with water (water added to tank)
Step 3: Diafiltration of the retentate with a nanofiltration retentate of a milk ultrafiltration permeate (added to tank)
Step 4: Diafiltration of the retentate with water (water added to tank)
Step 5: Ultrafiltration of the retentate with no addition of liquid to obtain end concentration

The composition of the whey stream, the nanofiltration retentate and the whey protein concentrate (UF retentate) obtained is shown in table 4 below:
In the table 4, the term "Retent." refers to retentate.

The result shown in table 4 shows that the mineral content in a whey can be controlled by using a diafiltration liquid with a different mineral content than in the whey.

**Table 4:**

| | | | Step 2 | Step 3 | | | | | Sept 4 | Step 5 |
|---|---|---|---|---|---|---|---|---|---|---|
| | NF retent. | Whey | Retent. | Retent. | Retent. | Retent. | Retent. | Retent. | Retent. | Retent. |
| | Dia liquid | WPC 28 | WPC 80 | 30 L Dia liquid | 60 L Dia liquid | 90L Dia liquid | 120 L Dia liq. | 150 L Dia liq. | WPC75 | WPC80 |
| Ash (%) | 0.420 | 0.680 | 0.630 | 0.670 | 0.630 | 0.710 | 0.710 | 0.730 | 0.670 | 0.580 |
| Calcium (%) | 0.081 | 0.087 | 0.105 | 0.105 | 0.106 | 0.105 | 0.105 | 0.104 | 0.100 | 0.094 |
| Potassium (%) | 0.106 | 0.141 | 0.100 | 0.115 | 0.125 | 0.133 | 0.139 | 0.143 | 0.125 | 0.104 |
| Magnesium (%) | 0.006 | 0.010 | 0.012 | 0.013 | 0.013 | 0.014 | 0.014 | 0.014 | 0.014 | 0.013 |
| Sodium (%) | 0.024 | 0.032 | 0.023 | 0.026 | 0.028 | 0.029 | 0.031 | 0.032 | 0,028 | 0.023 |
| Protein (%) | 0.120 | 2.240 | 14.910 | 15.550 | 15.540 | 15.480 | 15.580 | 15.610 | 16.100 | 16.210 |
| Total solids (%) | 4.840 | 7.980 | 19.260 | 20.540 | 21.010 | 21.110 | 21.490 | 21.670 | 21.280 | 20.610 |
| Ash (%-TS) | 8.677 | 8.521 | 3.271 | 3.262 | 2.999 | 3.364 | 3.09 | 3.369 | 3.149 | 2.8627 |
| Calcium (%-TS) | 0.645 | 1.095 | 0.543 | 0.509 | 0.503 | 0.498 | 0.487 | 0.480 | 0.468 | 0.457 |
| Potassium (%-TS) | 2.199 | 1.769 | 0.522 | 0.557 | 0.596 | 0.629 | 0.646 | 0.659 | 0.586 | 0.506 |
| Magnesium (%-TS) | 0.126 | 0.128 | 0.061 | 0.061 | 0.023 | 0.064 | 0.065 | 0.066 | 0.064 | 0.062 |
| Sodium (%-TS) | 0.489 | 0.407 | 0.118 | 0.126 | 0.133 | 0.139 | 0.144 | 0.146 | 0.129 | 0.112 |
| Protein (%-TS) | 2.479 | 28.070 | 77.414 | 75.706 | 73.965 | 73.378 | 72.499 | 72.085 | 75.658 | 78.651 |

### Example 3: Analysis of calcium after ultrafiltration of whey - solubilised calcium

The purpose of this example is to show that whey comprises different types of calcium, namely:
- calcium that is bound to protein
- calcium that is precipitated as calcium complexes with other ions, e.g. phosphor
- calcium that is solubilised (not protein bound and not precipitated)

The solubilised calcium in whey is difficult to measure directly in the whey with analytical methods, but the solubilised calcium is the only calcium that passes the ultrafiltration membrane and therefore ends in the ultrafiltration permeate. The protein bound calcium and the precipitated calcium will not pass the ultrafiltration membrane and will therefore be collected in the ultrafiltration retentate. To demonstrate this, this example shows the analysis of calcium after ultrafiltration of whey. A whey having a high calcium content has been compared to a whey having a low calcium content.

The ultrafiltration was made by using a combination of ultrafiltration (no liquid added) to an initial concentration, diafiltration with water added as the diafiltration liquid and end concentration. The obtained ultrafiltration retentate (whey protein concentrate) had 15-17% protein)

The ultrafiltration and diafiltration was made with an ultrafiltration membrane from Alfa Laval, GR82PE.

In table 5 below, the calcium, protein and solid content is shown for the low calcium whey and for the high calcium whey.

**Table 5:**

| Low calcium whey | | | | |
|---|---|---|---|---|
| | | Feed | Retentate | Permeate |
| Calcium | % | 0.05 | 0.08 | 0.04 |
| Protein | % | 3.51 | 17.10 | 0.16 |
| Solid content | % | 8.61 | 21.08 | 4.75 |
| Calcium | Kg | 0.581 | 0.190 | 0.391 |
| Protein | Kg | 41.067 | 39.347 | 1.720 |
| Solid content | Kg | 100.737 | 48.506 | 52.231 |
| Calcium | % of TS* | 0.58 | 0.39 | 0.75 |
| Protein | % of TS* | 40.77 | 81.12 | 3.29 |

| High calcium whey | | | | |
|---|---|---|---|---|
| | | Feed | Retentate | Permeate |
| Calcium | % | 0.08 | 0.09 | 0.05 |
| Protein | % | 2.37 | 15.54 | 0.15 |
| Solid content | % | 8.43 | 18.77 | 4.52 |
| Calcium | Kg | 0.90 | 0.14 | 0.75 |
| Protein | Kg | 25.76 | 23.69 | 2.07 |
| Solid content | Kg | 91.63 | 28.61 | 63.02 |
| Calcium | % of TS* | 0.98 | 0.50 | 1.20 |
| Protein | % of TS* | 28.11 | 82.79 | 3.29 |

| | | | | |
|---|---|---|---|---|
| * The term TS refers to total solid content | | | | |

From table 5, it is shown that the calcium content in the ultrafiltration permeate of "low calcium whey" and "high calcium whey" is 0.75% and 1.20% of the total solid content respectively.

The calcium content in the ultrafiltration permeate is solubilised calcium from the whey.

The ultrafiltration retentate of the "low calcium whey" and "high calcium whey" is 0.39% and 0.50% of the total solid content respectively.

The calcium present in the ultrafiltration retentate is precipitated calcium, protein-bound and some solubilised calcium.

Hence, example 3 shows that it is the solubilised calcium content that can be amended with the method of the present invention, since only solubilised calcium is in the permeate obtained from ultrafiltration and diafiltration with an ultrafiltration membrane

### Example 4: Measurement of conductivity and brix of different diafiltration liauids as compared to water

The purpose of this example is to demonstrate that the diafiltration liquid used in the present invention is different from water. Therefore, the conductivity and Briz of different samples of diafiltration liquid of the present invention have been measured. In addition, the conductivity and Brix of tap water and distilled water has been measured:

The following samples were prepared and analysed for conductivity and Brix.
- Tap water
- Demineralised water
- Milk ultrafiltration (UF) permeate
- Nanofiltration (NF) retentate of a milk ultrafiltration (UF) permeate
- Nanofiltration permeate of a milk ultrafiltration permeate
- A reverse osmosis permeate of milk nanofiltration permeate
- Reverse osmosis retentate of a whey permeate

All samples are provided by Arla Food Ingredients.

The samples were measured for conductivity using WTW - Conductivity portable meter ProfiLine Cond 3110 and using the standard DIN EN 27888.

In table 6 below is the conductivity and brix of the sample shown.

**Table 6:**

| Sample | Conductivity (mS/cm) | Brix (°Bx) |
|---|---|---|
| Tap water | 0.58 | 0 |
| Demineralised water | 0.005 | 0 |
| Milk UF permeate | 8.7 | 5.5 |
| NF retentate of milk UF permeate | 9.5 | 26.1 |
| NF permeate of milk UF permeate | 7.4 | 1.7 |
| RO permeate of milk NF permeate | 0.08 | 0.2 |
| RO retentate of whey permeate | 20 | 15.2 |

Table 6 shows that the milk UF permeate, NF retentate of milk UF permeate, NF permeate of milk UF permeate and RO retentate whey permeate all have a much higher conductivity and Brix than the conductivity and Brix of tap water, demineralised water and RO permeate of milk NF permeate.

It was expected that the RO permeate would have a low conductivity and Brix since the RO membrane is very tight and retains almost all solid content such that the permeate is almost corresponding to water.

## Claims

1. A method of preparing a whey protein concentrate having a controlled mineral content, wherein the method comprises:
a) providing whey;
b) subjecting the whey to diafiltration with a diafiltration liquid comprising minerals, and wherein the diafiltration liquid comprises minerals in an amount different from the amount of minerals in the whey, and wherein the conductivity of the diafiltration liquid is at least 2.0mS/cm when measured using the Standard DIN EN 27888;
and hereby obtaining a whey protein concentrate having a controlled mineral content.

2. The method according to claim 1, wherein the degrees Brix of the diafiltration liquid is at least 1.0°bx.

3. The method according to any of the claims 1 to 2, wherein the diafiltration is with an ultrafiltration membrane.

4. The method according to any of the claims 1 to 3, wherein the diafiltration liquid comprises solubilised calcium in an amount different from the amount of solubilised calcium in the whey.

5. The method according to any of the claims 1 to 4, wherein the whey provided in step a) comprises a content of total calcium in an amount by weight of the total solid content that is higher than the content of total calcium by weight of the total solid content of the diafiltration liquid.

6. The method according to any of the claims 1 to 5, wherein the whey comprises a content of total calcium in an amount by weight of the total solid content at least 5% higher than the content of total calcium by weight of the total solid content of the diafiltration liquid.

7. The method according to any of the claims 1 to 6, wherein the whey comprises a content of total calcium in an amount of 0.70% by weight or more of the solid content.

8. The method according to any of the claims 1 to 7, wherein the diafiltration liquid is selected from the group consisting of a milk ultrafiltration permeate, a whey ultrafiltration permeate, a nanofiltration retentate of a milk ultrafiltration permeate, a nanofiltration permeate of a milk ultrafiltration permeate, a nanofiltration retentate of a whey ultrafiltration permeate, a reverse osmosis retentate of a milk ultrafiltration permeate, a reverse osmosis retentate of a whey ultrafiltration permeate and a solution of minerals in water.

9. The method according to any of the claims 1 to 8, wherein the whey has a pH in the range of 4.6 to 6.5.

10. The method according to any of the claims 1 to 9, wherein the method further comprises subjecting the whey and/or diafiltrated whey to ultrafiltration.

11. The method according to any of the claims 1 to 10, wherein the diafiltration in step b) comprises one or more diafiltration step(s).

12. The method according to any of the claims 10 to 11, wherein the ultrafiltration comprises one or more ultrafiltration step(s).

13. The method according to any of the claims 1 to 12, wherein the whey provided in step a) is obtained by the following method steps:
i) providing a dairy milk product;
ii) subjecting the dairy milk product to ultrafiltration to obtain a milk ultrafiltration retentate and a milk ultrafiltration permeate;
iii) adding a food grade acid to the milk ultrafiltration retentate from step ii) to adjusting pH of the milk ultrafiltration retentate to be in the range of 4.6 to 6.5;
iv) subjecting the acidified milk ultrafiltration retentate of step iii) to a second ultrafiltration to provide a second milk acidified ultrafiltration retentate and a second milk acidified ultrafiltration permeate;
v) subjecting the second milk acidified ultrafiltration retentate to cheese processing steps to obtain cheese curd and whey;
vi) separating the obtained whey from the cheese curd.

14. The method according to any of the claims 1 to 12, wherein the whey provided in step a) is obtained by the following method steps:
i) providing a dairy milk product;
ii) subjecting the dairy milk product to ultrafiltration to obtain a milk ultrafiltration retentate and a milk ultrafiltration permeate;
iii) optionally subjecting the milk ultrafiltration retentate from step ii) to fat standardization;
iv) adding a food grade acid and subjecting the milk ultrafiltration retentate of step ii) or the fat standardized milk ultrafiltration retentate of step iii) to cheese processing steps to obtain cheese curd and whey;
v) separating the obtained whey from the cheese curd.

15. The method according to any of the claims 1 to 14, wherein the method comprises subjecting the whey provided in step a) to pH adjustment before diafiltration in step b).

16. The method according to any of the claims 1 to 15, wherein the whey provided in step a) is pasteurized before diafiltration in step b).

17. The method according to any of the claims 1 to 16, wherein the whey provided in step a) is diluted with water before diafiltration in step b).

## Patentansprüche

1. Verfahren zum Herstellen eines Molkenproteinkonzentrats, das einen kontrollierten Mineralstoffgehalt aufweist, wobei das Verfahren Folgendes umfasst:
a) Bereitstellen von Molke;
b) Unterziehen der Molke einer Diafiltration mit einer Diafiltrationsflüssigkeit, die Mineralstoffe umfasst, und wobei die Diafiltrationsflüssigkeit Mineralstoffe in einer Menge umfasst, die sich von der Menge an Mineralstoffen in der Molke unterscheidet, und wobei die Leitfähigkeit der Diafiltrationsflüssigkeit mindestens 2,0 mS/cm beträgt, wenn sie unter Verwendung der Norm DIN EN 27888 gemessen wird;
und dadurch Erhalten eines Molkenproteinkonzentrats, das einen kontrollierten Mineralstoffgehalt aufweist.

2. Verfahren nach Anspruch 1, wobei der Brix-Grad der Diafiltrationsflüssigkeit mindestens 1,0 °Bx beträgt.

3. Verfahren nach einem der Ansprüche 1 bis 2, wobei die Diafiltration mit einer Ultrafiltrationsmembran erfolgt.

4. Verfahren nach einem der Ansprüche 1 bis 3, wobei die Diafiltrationsflüssigkeit solubilisiertes Calcium in einer Menge umfasst, die sich von der Menge an solubilisiertem Calcium in der Molke unterscheidet.

5. Verfahren nach einem der Ansprüche 1 bis 4, wobei die in Schritt a) bereitgestellte Molke einen Gehalt an Gesamtcalcium in einer Menge, bezogen auf das Gewicht des Gesamtfeststoffgehalts, umfasst, der höher ist als der Gehalt an Gesamtcalcium, bezogen auf das Gewicht des Gesamtfeststoffgehalts, der Diafiltrationsflüssigkeit.

6. Verfahren nach einem der Ansprüche 1 bis 5, wobei die Molke einen Gehalt an Gesamtcalcium in einer Menge, bezogen auf das Gewicht des Gesamtfeststoffgehalts, umfasst, der mindestens 5 % höher ist als der Gehalt an Gesamtcalcium, bezogen auf das Gewicht des Gesamtfeststoffgehalts, der Diafiltrationsflüssigkeit.

7. Verfahren nach einem der Ansprüche 1 bis 6, wobei die Molke einen Gehalt an Gesamtcalcium in einer Menge von 0,70 Gew.-% oder mehr des Feststoffgehalts umfasst.

8. Verfahren nach einem der Ansprüche 1 bis 7, wobei die Diafiltrationsflüssigkeit ausgewählt ist aus der Gruppe bestehend aus einem Milch-Ultrafiltrationspermeat, einem Molken-Ultrafiltrationspermeat, einem Nanofiltrationsretentat eines Milch-Ultrafiltrationspermeats, einem Nanofiltrationspermeat eines Milch-Ultrafiltrationspermeats, einem Nanofiltrationsretentat eines Molken-Ultrafiltrationspermeats, einem Umkehrosmoseretentat eines Milch-Ultrafiltrationspermeats, einem Umkehrosmoseretentat eines Molken-Ultrafiltrationspermeats und einer Lösung von Mineralstoffen in Wasser.

9. Verfahren nach einem der Ansprüche 1 bis 8, wobei die Molke einen pH-Wert im Bereich von 4,6 bis 6,5 aufweist.

10. Verfahren nach einem der Ansprüche 1 bis 9, wobei das Verfahren weiter das Unterziehen der Molke und/oder der diafiltrierten Molke einer Ultrafiltration umfasst.

11. Verfahren nach einem der Ansprüche 1 bis 10, wobei die Diafiltration in Schritt b) einen oder mehrere Diafiltrationsschritt(e) umfasst.

12. Verfahren nach einem der Ansprüche 10 bis 11, wobei die Ultrafiltration einen oder mehrere Ultrafiltrationsschritt(e) umfasst.

13. Verfahren nach einem der Ansprüche 1 bis 12, wobei die in Schritt a) bereitgestellte Molke durch die folgenden Verfahrensschritte erhalten wird:
i) Bereitstellen eines Molkereimilchprodukts;
ii) Unterziehen des Molkereimilchprodukts einer Ultrafiltration, um ein Milch-Ultrafiltrationsretentat
und ein Milch-Ultrafiltrationspermeat zu erhalten;
iii) Zugeben einer lebensmitteltauglichen Säure zu dem Milch-Ultrafiltrationsretentat aus Schritt ii), um den pH-Wert des Milch-Ultrafiltrationsretentats so einzustellen, dass er in dem Bereich von 4,6 bis 6,5 liegt;
iv) Unterziehen des angesäuerten Milch-Ultrafiltrationsretentats aus Schritt iii) einer zweiten Ultrafiltration, um ein zweites angesäuertes Milch-Ultrafiltrationsretentat und ein zweites angesäuertes Milch-Ultrafiltrationspermeat bereitzustellen;
v) Unterziehen des zweiten angesäuerten Milch-Ultrafiltrationsretentats Käseherstellungsschritten, um Käsebruch und Molke zu erhalten;
vi) Abtrennen der erhaltenen Molke von dem Käsebruch.

14. Verfahren nach einem der Ansprüche 1 bis 12, wobei die in Schritt a) bereitgestellte Molke durch die folgenden Verfahrensschritte erhalten wird:
i) Bereitstellen eines Molkereimilchprodukts;
ii) Unterziehen des Molkereimilchprodukts einer Ultrafiltration, um ein Milch-Ultrafiltrationsretentat und ein Milch-Ultrafiltrationspermeat zu erhalten;
iii) optionales Unterziehen des Milch-Ultrafiltrationsretentats aus Schritt ii) einer Fettstandardisierung;
iv) Zugeben einer lebensmitteltauglichen Säure und Unterziehen des Milch-Ultrafiltrationsretentats aus Schritt ii) oder des fettstandardisierten Milch-Ultrafiltrationsretentats aus Schritt iii) Käseherstellungsschritten, um Käsebruch und Molke zu erhalten;
v) Abtrennen der erhaltenen Molke von dem Käsebruch.

15. Verfahren nach einem der Ansprüche 1 bis 14, wobei das Verfahren das Unterziehen der in Schritt a) bereitgestellten Molke einer pH-Einstellung vor der Diafiltration in Schritt b) umfasst.

16. Verfahren nach einem der Ansprüche 1 bis 15, wobei die in Schritt a) bereitgestellte Molke vor der Diafiltration in Schritt b) pasteurisiert wird.

17. Verfahren nach einem der Ansprüche 1 bis 16, wobei die in Schritt a) bereitgestellte Molke vor der Diafiltration in Schritt b) mit Wasser verdünnt wird.

## Revendications

1. Procédé de préparation d'un concentré de protéine de lactosérum présentant une teneur en minéraux contrôlée, dans lequel le procédé comprend :
a) la fourniture du lactosérum ;
b) la soumission du lactosérum à une diafiltration avec un liquide de diafiltration comprenant des minéraux, et dans lequel le liquide de diafiltration comprend des minéraux en une quantité différente de la quantité de minéraux dans le lactosérum, et dans lequel la conductivité du liquide de diafiltration est d'au moins 2,0 mS/cm lorsqu'elle est mesurée en utilisant la norme DIN EN 27888 ;
et ainsi l'obtention d'un concentré de protéine de lactosérum présentant une teneur en minéraux contrôlée.

2. Procédé selon la revendication 1, dans lequel le degré Brix du liquide de diafiltration est d'au moins 1,0°bx.

3. Procédé selon l'une quelconque des revendications 1 à 2, dans lequel la diafiltration est avec une membrane d'ultrafiltration.

4. Procédé selon l'une quelconque des revendications 1 à 3, dans lequel le liquide de diafiltration comprend du calcium solubilisé en une quantité différente de la quantité de calcium solubilisé dans le lactosérum.

5. Procédé selon l'une quelconque des revendications 1 à 4, dans lequel le lactosérum fourni à l'étape a) comprend une teneur en calcium total en une quantité en poids de la teneur en matières solides totales qui est supérieure à la teneur en calcium total en poids de la teneur en matières solides totales du liquide de diafiltration.

6. Procédé selon l'une quelconque des revendications 1 à 5, dans lequel le lactosérum comprend une teneur en calcium total en une quantité en poids de la teneur en matières solides totales au moins 5 % supérieure à la teneur en calcium total en poids de la teneur en matières solides totales du liquide de diafiltration.

7. Procédé selon l'une quelconque des revendications 1 à 6, dans lequel le lactosérum comprend une teneur en calcium total en une quantité de 0,70 % en poids ou plus de la teneur solide.

8. Procédé selon l'une quelconque des revendications 1 à 7, dans lequel le liquide de diafiltration est sélectionné dans le groupe consistant en un perméat d'ultrafiltration de lait, un perméat d'ultrafiltration de lactosérum, un rétentat de nanofiltration d'un perméat d'ultrafiltration de lait, un perméat de nanofiltration d'un perméat d'ultrafiltration de lait, un rétentat de nanofiltration d'un perméat d'ultrafiltration de lactosérum, un rétentat d'osmose inverse d'un perméat d'ultrafiltration de lait, un rétentat d'osmose inverse d'un perméat d'ultrafiltration de lactosérum et une solution de minéraux dans l'eau.

9. Procédé selon l'une quelconque des revendications 1 à 8, dans lequel le lactosérum présente un pH dans la gamme de 4,6 à 6,5.

10. Procédé selon l'une quelconque des revendications 1 à 9, dans lequel le procédé comprend en outre la soumission du lactosérum et/ou du lactosérum diafiltré à une ultrafiltration.

11. Procédé selon l'une quelconque des revendications 1 à 10, dans lequel la diafiltration à l'étape b) comprend une ou plusieurs étapes de diafiltration.

12. Procédé selon l'une quelconque des revendications 10 à 11, dans lequel l'ultrafiltration comprend une ou plusieurs étapes d'ultrafiltration.

13. Procédé selon l'une quelconque des revendications 1 à 12, dans lequel le lactosérum fourni à l'étape a) est obtenu par les étapes de procédé suivantes :
i) la fourniture d'un produit laitier ;
ii) la soumission du produit laitier à une ultrafiltration pour obtenir un rétentat d'ultrafiltration de lait et un perméat d'ultrafiltration de lait ;
iii) l'ajout d'un acide de qualité alimentaire au rétentat d'ultrafiltration de lait de l'étape ii) pour ajuster le pH du rétentat d'ultrafiltration de lait pour qu'il soit dans la plage de 4,6 à 6,5 ;
iv) la soumission du rétentat d'ultrafiltration de lait acidifié de l'étape iii) à une deuxième ultrafiltration pour fournir un deuxième rétentat d'ultrafiltration de lait acidifié et un deuxième perméat d'ultrafiltration de lait acidifié ;
v) la soumission du deuxième rétentat d'ultrafiltration de lait acidifié à des étapes de transformation fromagère pour obtenir du caillé et du lactosérum ;
vi) la séparation du lactosérum obtenu du caillé.

14. Procédé selon l'une quelconque des revendications 1 à 12, dans lequel le lactosérum fourni à l'étape a) est obtenu par les étapes de procédé suivantes :
i) la fourniture d'un produit laitier ;
ii) la soumission du produit laitier à une ultrafiltration pour obtenir un rétentat d'ultrafiltration de lait et un perméat d'ultrafiltration de lait ;
iii) facultativement la soumission du rétentat d'ultrafiltration de lait de l'étape ii) à une standardisation des matières grasses ;
iv) l'ajout d'un acide de qualité alimentaire et la soumission du rétentat d'ultrafiltration de lait de l'étape ii) ou du rétentat d'ultrafiltration de lait à matières grasses standardisées de l'étape iii) à des étapes de transformation fromagère pour obtenir du caillé et du lactosérum ;
v) la séparation du lactosérum obtenu du caillé.

15. Procédé selon l'une quelconque des revendications 1 à 14, dans lequel le procédé comprend la soumission du lactosérum fourni à l'étape a) à un ajustement du pH avant diafiltration à l'étape b).

16. Procédé selon l'une quelconque des revendications 1 à 15, dans lequel le lactosérum fourni à l'étape a) est pasteurisé avant diafiltration à l'étape b).

17. Procédé selon l'une quelconque des revendications 1 à 16, dans lequel le lactosérum fourni à l'étape a) est dilué avec de l'eau avant diafiltration à l'étape b).
